# EUROPÄISCHE PATENTSCHRIFT

(11) **EP 2 424 389 B1**
(45) Veröffentlichungstag und Bekanntmachung des Hinweises auf die Patenterteilung: **07.11.2012**
(21) Anmeldenummer: 11726767.4
(22) Anmeldetag: 19.06.2011
(51) Int. Cl.: A23L 1/318

(54) **VERFAHREN ZUR VEREDELUNG VON FRISCHFLEISCH**
PROCESS FOR UPGRADING FRESH MEAT
PROCÉDÉ D'AFFINAGE DE VIANDE FRAÎCHE

(30) Priorität: 21.06.2010 CH 9932010; 08.10.2010 EP 10186921; 23.04.2011 EP 11163616
(43) Veröffentlichungstag der Anmeldung: 07.03.2012
(73) Patentinhaber: Oechslin, Lucas, 8055 Zürich (CH); Tessaro, Marco, 8055 Zürich (CH)
(72) Erfinder: Oechslin, Lucas, 8055 Zürich (CH); Tessaro, Marco, 8055 Zürich (CH)
(74) Vertreter: Dr. Graf & Partner AG
(86) Internationale Anmeldenummer: PCT/EP2011/060175
(87) Internationale Veröffentlichungsnummer: WO 2011/161028

(56) Entgegenhaltungen:
- GB-A- 875 339
- US-A- 2 816 836
- US-A- 3 056 679
- US-A- 3 128 191
- ANONYMOUS: "Fast aging with mold spray", MEAT INDUSTRY, Bd. 24, Nr. 8, 1. August 1978 (1978-08-01) , Seite 51, XP009144940,
- Ulrike Jenß: "Die Herstellung und Veredelung von Lebensmitteln durch Mikroorganismen", 1. August 2009 (2009-08-01), Grin Verlag, XP002624027, Seiten 97-98, das ganze Dokument
- SHAHANI K M; ARNOLD R G; KILARA A; DWIVEDI B K: "ROLE OF MICROBIAL ENZYMES IN FLAVOR DEVELOPMENT IN FOODS", BIOTECHNOLOGY AND BIOENGINEERING, Bd. 18, Nr. 7, 1. Juli 1976 (1976-07-01), Seiten 891-907, XP002624028, DOI: 10.1002%2Fbit.260180703

## Beschreibung

Die Erfindung betrifft ein Verfahren zur Veredelung von Frischfleisch gemäss dem Oberbegriff von Anspruch 1. Sowie der Verwendung nach Anspruch 11.

### Stand der Technik

Nach der Schlachtung wird Frischfleisch einer so genannten Fleischreifung unterzogen. Die während der Fleischreifung ablaufenden Prozesse beeinflussen insbesondere die Zartheit, das Aroma und die Saftigkeit des Fleisches, weshalb diese Prozesse für die letztendlich erzielte Fleischqualität von entscheidender Bedeutung sind.

Die Fleischreifung ist ein Vorgang, der sich innerhalb der Muskelfasern des Fleisches abspielt. Die Fleischreifung beginnt bereits nach dem Schlachten während des Abkühlens des noch warmen Fleisches. Die Fleischreifung verläuft in zwei Phasen:
In der ersten Phase der Fleischreifung geht die zunächst weiche und schlaffe Muskulatur in die Totenstarre (Rigor mortis) über. Dies geschieht, weil mit der Schlachtung die Blutversorgung und damit die Sauerstoffversorgung der Muskeln unterbrochen wird. Der Stoffwechsel verläuft nun unter anaeroben Bedingungen. Dabei wird das in der Muskulatur befindliche Kohlenhydrat Glycogen zu Milchsäure (Lactat) abgebaut und Energie, das ATP, gewonnen. ATP wirkt im lebenden, zusammengezogenen (kontrahierten) Muskel als "Weichmacher". Sind die Glycogenvorräte verbraucht, kann kein ATP mehr gebildet werden, welches den Muskel nach der Kontraktion wieder weich und schlaff werden lässt. Die Muskulatur verharrt nun in einem angespannten, starren Zustand und ist gekennzeichnet durch eine maximale Zähigkeit und ein minimales Wasserbindevermögen.

In der zweiten Phase der Fleischreifung finden die für die letztendlich erzielte Fleischqualität wesentlichen Prozesse statt. Die Totenstarre löst sich beispielsweise beim Rind üblicherweise nach etwa 24 bis 30 Stunden. Die während der ersten Phase entstehende Milchsäure hat zur Folge, dass der pH-Wert von über 7 während des Schlachtens auf unter 5,8 absinkt. Freiwerdende, eiweiss-spaltende Enzyme, z.B. die Kathepsine und Calpaine, bewirken in der zweiten Phase eine Auflösung der Muskelfaserstrukturen (Myofibrillen), was die Zartheit des Fleisches zunehmend verbessert. Die dabei entstehenden freien Aminosäuren sind zudem wichtig für die Ausbildung des Aromas beziehungsweise für den Wohlgeschmack des Fleisches. Auch das Wasserbindevermögen nimmt während der Fleischreifung wieder zu und kann somit durch den Reifungsprozess beeinflusst werden. Die Fleischreifung beeinflusst somit die Zartheit, das Aroma und die Saftigkeit des Fleisches.

Es sind verschiedene Verfahren zur Fleischreifung bekannt.

Beim so genannten "Wet-aging" wird das Frischfleisch nach der Schlachtung vom Knochen gelöst und für die Fleischreifung vakuumverpackt. Durch dieses Verfahren kann kein Wasser aus dem Fleisch verdunsten, weshalb das Fleisch während der Reifung praktisch kein Gewicht verliert, was wirtschaftlich vorteilhaft ist. Das Fleisch wird nach einer bestimmten Lagerzeit der Vakuumverpackung entnommen und kann zum Verkauf angeboten werden.

Beim so genannten "Dry-aging" wird das Frischfleisch nicht vom Knochen gelöst und nicht vakuumverpackt, was eine qualitativ hoch stehende Fleischreifung ermöglicht. Die Knochen, welche bei der Lagerung nicht entfernt wurden, bewirken, dass das Fleisch reicher an Aromen wird. Das Dry-aging weist den Nachteil auf, dass das Fleisch bedingt durch eine Kaltverdampfung des sich im Fleisch befindlichen Wassers an Gewicht verliert. Das Dry-aging weist den weiteren Nachteil auf, dass das Fleisch angetrocknete Oberflächen ausbildet, welche abgeschnitten werden müssen, was einen weiteren Gewichtsverlust zur Folge hat. Das Dry-aging weist gegenüber dem Wet-aging den Vorteil auf, dass das Fleisch ein verbessertes Aroma aufweist, beispielsweise wegen dem am Fleisch verbliebenen Knochen, und da die Aromastoffe im Fleisch bedingt durch den Wasserverlust konzentriert werden.

Bekannte Verfahren weisen somit bezüglich Gewichtsverlust, Aromastoffen und Zartheit des Fleisches Nachteile auf.

Das Dokument US 3 056 679 offenbart ein Verfahren zur beschleunigten Fleischreifung und zur Geschmacksverbesserung des Fleisches durch die Verwendung des Schimmelpilzes Thamnidium elegans, wobei das Fleisch zwischen 12 und 48 Stunden und bei 4.4 Grad C gereift wird.

Das Dokument US 3 128 191 offenbart ein Verfahren zur beschleunigten Fleischreifung und zur Geschmacksverbesserung des Fleisches durch die Verwendung des Schimmelpilzes Thamnidium elegans, wobei das Fleisch zwischen 1 und 10 Tagen bei Temperaturen zwischen 1,7 Grad C und 4.4 Grad C gereift wird.

Das Dokument GB 875 339 offenbart ein Verfahren zur beschleunigten Fleischreifung und zur Geschmacksverbesserung des Fleisches durch die Verwendung des Schimmelpilzes Thamnidium elegans, wobei das Fleisch während 48 Stunden gereift wird, wobei die Temperatur während den ersten 8 Stunden von 1,7 Grad C auf zwischen 15.6 Grad C und 24.9 Grad C erhöht wird, und wobei das Fleisch danach während 32 Stunden und einer Temperatur zwischen 18.3 Grad C und 24.9 Grad C gereift wird, und wobei das Fleisch danach während 8 Stunden und eine Temperatur zwischen 0 Grad C und 1.7 Grad C gekühlt wird.

Das Dokument US 2 816 836 offenbart ein Verfahren zur beschleunigten Fleischreifung und zur Geschmacksverbesserung des Fleisches durch die Verwendung des Schimmelpilzes Thamnidium elegans, wobei das Fleisch während 7 Tagen gereift wird, bei einer Temperatur von mehr als 7.2 Grad C und weniger als 15.6 Grad C.

Alle vier vorhin genannten Verfahren streben durch die Verwendung des Schimmelpilzes Thamnidium elegans eine Beschleunigung der Fleischreifung an. Derartige Verfahren werden auch als "fast aging"-Verfahren bezeichnet. Diese Verfahren weisen jedoch den Nachteil auf, dass der Geschmack und die Zartheit des Fleisches anspruchsvolle Fleischkenner nicht befriedigt.

### Darstellung der Erfindung

Aufgabe der Erfindung ist es ein verbessertes Verfahren zur Fleischreifung vorzuschlagen. Diese Aufgabe wird gelöst mit einem Verfahren aufweisend die Merkmale von Anspruch 1. Die Unteransprüche 2 bis 10 betreffen weitere, vorteilhafte Verfahrensschritte.

Die Aufgabe wird insbesondere gelöst mit einem Verfahren zur Veredelung von Frischfleisch, wobei während der Reifung des Fleisches der Schimmelpilz Thamnidium elegans zugegeben wird, und wobei das Fleisch in einem Temperaturbereich zwischen 0 bis 8 °C gelagert wird, und wobei das Fleisch bei einer relativen Luftfeuchtigkeit zwischen 50% und 98% gelagert wird, und wobei das Fleisch zwischen 21 bis 100 Tagen gelagert wird.

Besonders vorteilhaft wird das Fleisch in einem Temperaturbereich zwischen 1 bis 5 °C, bei einer relativen Luftfeuchtigkeit zwischen 75% und 95%, und zwischen 28 bis 45 Tagen gelagert.

Am vorteilhaftesten wird das Fleisch bei einer Temperatur zwischen 2 bis 4 °C, bei einer relativen Luftfeuchtigkeit zwischen 85% und 98%, vorzugsweise zwischen 90% und 98%, und zwischen 28 bis 45 Tagen gelagert.

Besonders vorteilhaft wird der Schimmelpilz Thamnidium elegans mit einer Sporendichte von zumindest 10⁹ Sporen pro cm² auf die

Oberfläche des Fleisches aufgetragen. Es kann sich als vorteilhaft erweisen eine höhere Sporendichte von zumindest 10¹² Sporen pro cm² aufzutragen, vorzugsweise zwischen 10¹² Sporen pro cm² bis 10¹⁵ Sporen pro cm². Der Schimmelpilz wird üblicherweise innerhalb von 3 Tagen nach der Schlachtung, vorzugsweise innerhalb von 2 Tagen nach der Schlachtung aufgetragen. Der Schimmelpilz kann notfalls noch bis zu 14 Tagen nach der Schlachtung aufgetragen werden. Um insbesondere ein Wachstum der Bakterien zu behindern und um einen genügend lange Einwirkzeit des Schimmelpilzes auf das Fleisch zu erzielen wird ein Aufbringen innerhalb von 2 bis 3 Tagen nach der Schlachtung bevorzugt.

Das erfindungsgemässe Verfahren weist den Vorteil auf, dass das behandelte Fleisch besonders zart und/oder saftig ist und eine in dieser Art bisher nicht gekannte, äusserst angenehme und intensive Geschmacksnote aufweist.

Aus dem Stand der Technik ist es bekannt den Schimmelpilz Thamnidium elegans zu verwenden um die Fleischreifung zu beschleunigen, sodass das Fleisch innerhalb von 10 Tagen gereift ist und zum Verkauf bereit steht.

Beim erfindungsgemässen Verfahren wurde überraschenderweise erkannt, dass der Schimmelpilz Thamnidium elegans bei einer bisher nicht gekannten, äusserst langen Lagerdauer von zwischen 21 bis 100 Tagen und vorzugsweise zwischen 28 bis 100 Tagen, im Fleisch eine besonders angenehme und intensive Geschmacksnote entstehen lässt und eine ungewöhnliche Zartheit des Fleisches bewirkt. Ein Fachmann hat den Schimmelpilz Thamnidium elegans bisher nur zur Beschleunigung der Fleischreifung verwendet, bis maximal 10 Tagen. Bisher konnte der Fachmann jedoch keinen Nutzen erkennen den Schimmelpilz Thamnidium elegans während mehr als 10 Tagen anzuwenden. Der Fachmann wurde auf Grunde seines Fachwissens sogar davon abgehalten eine längere Fleischreifung mit dem Schimmelpilz Thamnidium elegans in Betracht zu ziehen, da ihm mehrere Probleme bekannt sind, die sich bei längerer Lagerdauer ergeben. Eine Verlängerung der Fleischreifung über 10 Tage hinaus birgt ein erhebliches Risiko, dass das Fleisch verdirbt, insbesondere da Bakterien sich in Funktion der Zeit exponentiell vermehren, sodass mit jedem zusätzlichen Tag ein erhebliches Risiko besteht, dass das Fleisch verdirbt. Ein Fachmann hätte daher die aussergewöhnlich lange Dauer der Fleischreifung von zumindest 21 Tagen und mehr nicht in Betracht gezogen. Eine Fleischreifung von mehr als 10 Tagen führt zudem zu Wasserverlust sowie zu einer angetrockneten Oberfläche beziehungsweise zu einer Krustenbildung an der Fleischoberfläche. Diese Kruste kann nicht mehr verwendet werden und bildet somit einen Fleischverlust. Der Wasserverlust bewirkt zudem einen Gewichtsverlust. Um diese Verluste zu vermeiden hat ein Fachmann auch aus wirtschaftlichen Gründen eine Fleischreifung von mehr als 10 Tagen nicht in Betracht gezogen.

Eine Fleischreifung von zumindest 21 Tagen unter Verwendung des Schimmelpilzes Thamnidium elegans hat zur Folge, dass das Fleisch bis in den Kern mit dem Pilz beziehungsweise dessen Mycel durchwachsen wird. Dies bewirkt ein besonders zartes, mit einer intensiven Geschmacksnote versehenes Fleisch.

Bei der erfindungsgemässen Fleischreifung gilt es sicherzustellen, dass das Fleisch nicht verdirbt. Unter üblichen Bedingungen weisen die Bakterien ein schnelleres Wachstum auf als der Schimmelpilz Thamnidium elegans. Daher ist es erforderlich die Verfahrensparameter der Fleischreifung und den Einsatz des Schimmelpilzes Thamnidium elegans so zu wählen, dass das Wachstum der Bakterien behindert und das Wachstum des Schimmelpilzes gefördert wird. In einem besonders vorteilhaften Verfahren wird der Schimmelpilz Thamnidium elegans mit einer Sporendichte von zumindest 10⁹ Sporen pro cm² auf die Oberfläche des Fleisches aufgetragen. Dieser Auftrag erfolgt vorzugsweise innerhalb der ersten zwei bis vier Tage nach der Schlachtung des Tiers. Die antibakterielle Wirkung des Schimmelpilzes behindert in dieser hohen Konzentration das Wachstum der Bakterien besonders gut, wobei die Temperatur und die Luftfeuchtigkeit so angewendet werden, dass diese das Wachstum des Schimmelpilzes fördern und das Wachstum bzw. die Vermehrung der Bakterien behindern. Dadurch ist sichergestellt, dass das Fleisch auch bei Lagerzeiten zwischen 21 bzw. 28 und 100 Tagen nicht verdirbt.

Der Schimmelpilzes Thamnidium elegans wird vorteilhafterweise in flüssiger Form als Zellsuspension des Pilzes möglichst flächendeckend auf die Oberfläche des Fleisches aufgetragen, mit einer Sporendichte von vorzugsweise 10⁹ Sporen pro cm² bis 10¹⁵ Sporen pro cm², vorteilhafterweise mit 10¹² Sporen pro cm² bis 10¹⁵ Sporen pro cm² oder auch mit 10⁹ Sporen pro cm² bis 10¹² Sporen pro cm². Besonders vorteilhaft ist ein gleichmässiger Auftrag, um ein Wachstum der Bakterien an der gesamten Oberfläche des Fleisches zu behindern bzw. zu verhindern.

Das Fleisch ist nach Ablauf der Lagerzeit von zumindest 21 Tagen vollständig vom Schimmelpilzes Thamnidium elegans durchwachsen, und weist an der Oberfläche eine Kruste auf, welche vollständig vom Schimmelpilz bedeckt ist. Nach dem Ablauf der Lagerzeit wird diese Kruste abgeschnitten und entsorgt, und das Fleisch ist somit verkaufsfertig. Überraschenderweise hat sich gezeigt, dass das erfindungsgemässe Verfahren trotz des entstehenden Fleisch- und Gewichtsverlustes wirtschaftlich vorteilhaft ist, da ein Konsument bereit ist für die aussergewöhnliche Qualität des mit dem erfindungsgemässen Verfahren veredelten Fleisches einen bedeutenden Mehrpreis zu bezahlen.

### Kurze Beschreibung der Figuren

Die zur Erläuterung verwendeten Figuren zeigen:
- Fig. 1: Eine international anerkannte Klassierung von Fleisch bezüglich Fleischigkeit und Fettgehalt;
- Fig. 2: eine Unterteilung der Fleischigkeitsklassen;
- Fig. 3: eine Unterteilung der Fettgewebeklassen;
- Fig. 4: eine Grafik mit der Entwicklung der Festigkeit und des Geschmacks in Funktion der Zeit.

### Wege zur Ausführung der Erfindung

Beim erfindungsgemässen Verfahren zur Fleischreifung wird das Frischfleisch offen gelagert. Das Frischfleisch ist somit nicht verpackt, insbesondere auch nicht unter Vakuum verpackt. Der Knochen kann am Frischfleisch belassen werden oder auch abgelöst werden. Um ein besonders vorteilhaftes Aroma zu erlangen ist es vorteilhaft den Knochen am Frischfleisch zu belassen. Zudem wird das Fleisch mit dem Schimmelpilz *Thamnidium elegans* in Kontakt gebracht. Das erfindungsgemässen Verfahren zur Fleischreifung umfassend eine Behandlung mit dem genannten Schimmelpilz fördert den Geschmack und/oder erhöht die Zartheit und/oder die Saftigkeit des Fleisches. Unter dem Begriff Schimmelpilz *"Thamnidium elegans"* werden all dessen natürliche Stämme wie auch genetische Mutationen davon verstanden.

In einem beispielhaften Verfahren wird der Schimmelpilz zu Beginn der zweiten Phase der Fleischreifung, das heisst nach der vollständig abgeschlossenen Totenstarre des Muskels (1-2 Tage) mit dem Fleisch (Kalb, Rind, Lamm, Pferd, Schwein usw.) in Kontakt gebracht. Dabei werden die Sporen des Schimmelpilzes *Thamnidium elegans* beispielsweise durch Aufstreichen aufgebracht oder durch Eintauchen des Fleisches. *Tamnidium elegans* durchwächst das Fleisch während der nachfolgenden Lagerung und unterstütz mit verschiedenen Proteasen den Abbau der Totenstarre und des Kollagens. Dies führt zu einer Verbesserung der Zartheit. Zusätzlich hat *Thamnidium elegans* eine nussige Geschmacksnote im Fleisch zur Folge, welche von Fachleuten sehr geschätzt wird und als eine Eigenschaft für ein optimal gereiftes Fleisch gilt.

Ein Beimpfen des Fleisches mit *Thamnidium elegans* erfolgt beispielsweise wie nachfolgend beschrieben:
Nach erfolgter Kultivierung des Schimmelpilzes auf einem Malzextrakt-Festmedium bei Raumtemperatur und ca. 7 Tagen, wird eine erste Beurteilung der Schimmelpilzkolonie durchgeführt. Zeigt sich eine für die Sporenbildung typische Färbung, kann die Kultur für die Beimpfung des Fleisches verwendet werden. Die eigentliche Beimpfung findet im Kühlraum gleich zu Beginn der Fleischlagerung, das heisst vorzugsweise 1 bis 3 Tage nach der Schlachtung des Tieres statt. Dabei werden die Pilzsporen und -hyphen mit einem handelsüblichen Pinsel von der Festmediumkultur abgetragen und auf das Fleisch appliziert bzw. aufgetragen. Die auf die Oberfläche des Fleisches aufgebrachte Sporendichte beträgt etwa 10⁹ Sporen pro cm² bis 10¹⁵ Sporen pro cm². Dabei ist darauf zu achten, dass dies gleichmässig und flächendeckend geschieht. Dieser Vorgang kann falls erforderlich während der ersten Woche im Abstand von 2 und 4 Tagen wiederholt werden. Es kann sich auch als vorteilhaft erweisen das ganze Fleischstück kurz in der Flüssigkeit einzutauchen.

Auch in einem Kühlraum mit einer hohen Anzahl an bereits mit Schimmelpilz bewachsenen Fleischstücken reicht es nicht das Frischfleisch über die in der Luft zirkulierenden Pilzsporen zu beimpfen. Auch in diesem Fall ist das vorhin beschriebene Verfahren erforderlich, um eine genügen hohe Sporendichte auf der Fleischoberfläche zu gewährleisten.

Vorzugsweise wird während der Fleischreifung eine hohe relative Luftfeuchtigkeit verwendet. Ist die Luftfeuchtigkeit zu niedrig trocknet das Fleisch zu stark aus. Bezüglich der Luftfeuchtigkeit gilt es jedoch zu beachten, dass diese auch nicht zu hoch ist, da sich sonst Wasser auf dem Fleisch niederschlagen könnte, sodass auf dem Fleisch eine Schleimschicht entsteht könnte, was den Nachteil ergäbe, dass diese Schleimschicht ein Nährboden für unerwünschte Bakterien darstellt. Vorzugsweise wird zur Fleischreifung eine relative Luftfeuchtigkeit im Bereich zwischen 50% und 98% verwendet, insbesondere im Bereich von 75% bis 85 %, am Bevorzugtesten jedoch im Bereich von 85% bis 98%.

Die Lagerung findet bei einer Temperatur von mindestens 0°C statt, damit *Thamnidium elegans* ein genügendes Wachstum aufweist. Eine Erhöhung der Temperatur hat zur Folge, dass die Gefahr einer Kontamination des Fleisches durch nicht erwünschte Mikroorganismen steigt. Der vorteilhafte Temperaturbereich für die Lagerung des Fleisches mit *Thamnidium elegans* liegt im Bereich zwischen 0°C bis 8 °C und vorzugsweise im Bereich zwischen 2 bis 4°C.

Ein weiterer wichtiger Verfahrensparameter stellt die Zeitdauer der Lagerung dar. Die Zeitdauer wird so gewählt, dass die Totenstarre so weit wie möglich gelöst wird und *Thamnidium elegans* durch das ganze Fleisch wachsen kann um eine homogene Geschmacksverteilung wie auch einen gleichmässigen Kollagenabbau im Fleisch zu gewährleisten. Vorzugsweise liegt die Zeitdauer der Lagerung in einem Bereich zwischen 14 und 100 Tagen, und insbesondere in einem Bereich zwischen 21 bzw. 28 und 50 Tagen, insbesondere bei etwa 35 Tagen.

Besonders vorteilhaft wird das Fleisch in einem Temperaturbereich zwischen 1 bis 5 °C, bei einer relativen Luftfeuchtigkeit zwischen 75% und 95%, und zwischen 25 bis 45 Tagen gelagert. Noch vorteilhafter wird das Fleisch bei einer Temperatur von etwa 3 °C, bei einer relativen Luftfeuchtigkeit von etwa 85%, und während etwa 35 Tagen gelagert. Das Fleisch wird besonders vorteilhaft bei einer Temperatur zwischen 2 bis 4 °C, bei einer relativen Luftfeuchtigkeit zwischen 85% und 98%, vorzugsweise zwischen 90% und 98%, und zwischen 28 bis 45 Tagen gelagert.

Das Verfahren ist insbesondere zur Behandlung von Rindfleisch geeignet. Das Fleisch aller Rinderrassen ist geeignet, insbesondere das Fleisch Angus, Braunvieh, Simmenthaler, Charolais, Hereford, Wagyu oder Bison. Das Verfahren ist jedoch auch zur Behandlung von Kalb-, Lamm-, Pferde- oder Schweinefleisch geeignet.

Damit das Fleisch während der langen Lagerzeit nicht austrocknet wird vorteilhafterweise ein Fleisch mit einem relativ hohen Fettanteil verwendet, denn das Fett hat die Fähigkeit Wasser zu binden. Zudem wird vorteilhafterweise ein Fleisch mit einer hohen Fleischigkeit verwendet.

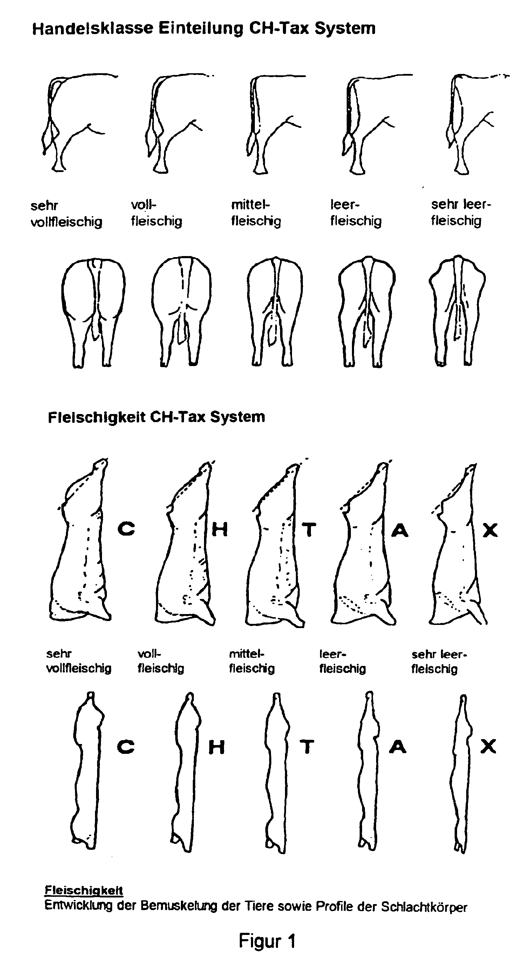

Die Eigenschaften von Schlachtfleisch werden basierend auf einer international anerkannten Klassierung bezüglich Fleischigkeit und Fettgehalt klassiert. In der Schweiz wird diese Klassierung als CH-Tax-System bezeichnet, welches Fleisch wie in den Figuren 1 bis 3 dargestellt klassiert.

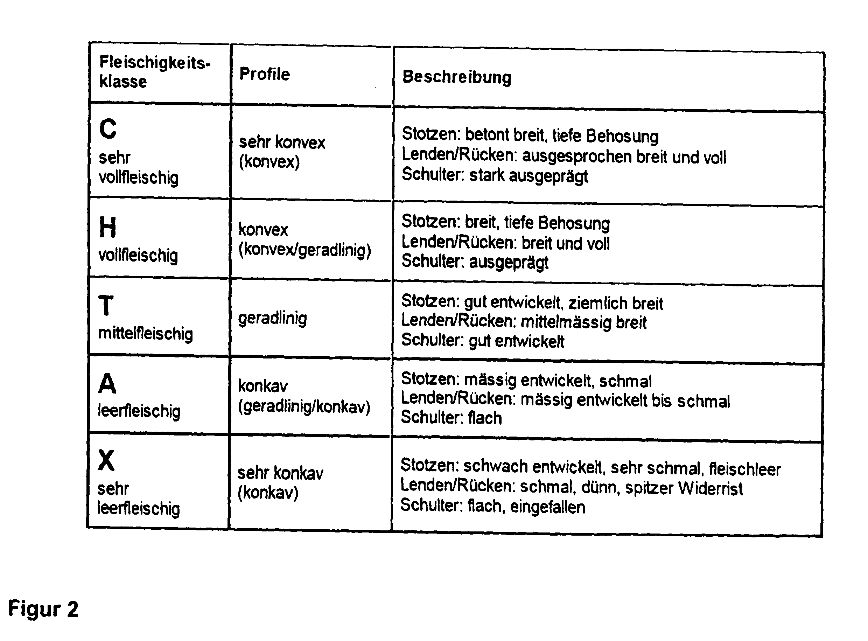

Das verwendete Fleisch für das erfindungsgemässe Verfahren kann, wie in den Figuren 1 und 2 dargestellt, eine Fleischigkeit zwischen C (sehr vollfleischig) und X (sehr leerfleischig) aufweisen. Vorzugsweise wird Fleisch mit einer Fleischigkeit zwischen C (sehr vollfleischig) und T (mittelfleischig) verwendet.

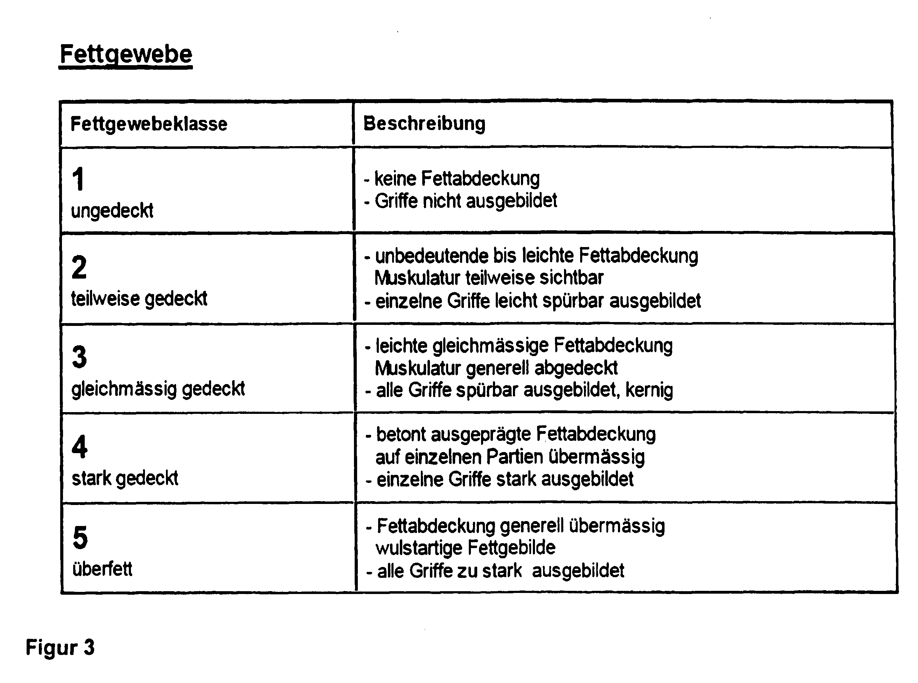

Bezüglich der in Figur 3 dargestellten Fettgewebeklasse wird vorzugsweise ein Fleisch zwischen Klasse 3 (gleichmässig gedeckt) und Klasse 5 (überfett) verwendet. Die Beurteilung des Fettgewebes des Schlachtkörpers (aussagekräftig ist zum Beispiel die Dicke der Fettschicht auf der Innenseite der Brusthöhle) ermöglicht indirekte Aussagen über Ausmästungsgrad, Fleisch-/Fettverhältnisse und Marmorierung des Fleisches.
Zur Beurteilung der Fleischqualität kann die Klassierung bezüglich Fleischigkeit und Fettgehalt kombiniert werden. Vorzugsweise wird Fleisch zwischen T3 (Fleischigkeitsklasse T und Fettgewebeklasse 3) und C5 (Fleischigkeitsklasse C und Fettgewebeklasse 5) verwendet.

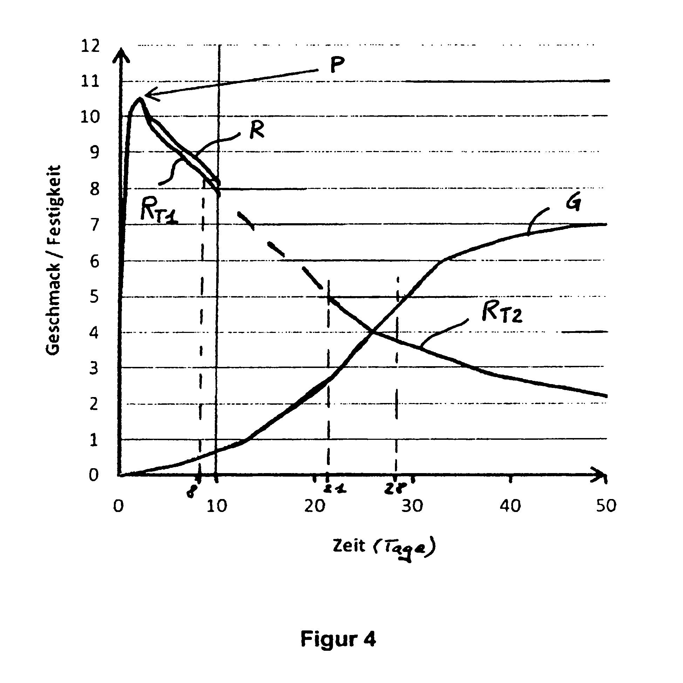

Figur 4 zeigt in einem Verfahrensbeispiel die Entwicklung der Festigkeit des Fleisches sowie die Entwicklung des Geschmacks des Fleisches in Funktion der Zeit. Die Ordinate zeigt eine Skala von 0 bis 12 und die Abszisse eine Zeitdauer von 50 Tage. Die Festigkeit des Fleisches wurde subjektiv und objektiv getestet und das Ergebnis auf Werte zwischen 0 und 12 skaliert, wobei die Skala so gewählt ist, dass das Fleisch bei 0 am zartesten ist und bei 12 am härtesten ist. Der Verlauf der Festigkeit des Fleisches in Funktion der Zeit bei heute üblicher Reifung, das heisst bei Reifung in einem Vakuumbeutel, und bei einer Reifedauer von maximal 10 Tagen ist in der Reifekurve R dargestellt. Die Festigkeit des Fleisches steigt unmittelbar nach der Schlachtung stark an und erreicht etwa 24 Stunden nach der Schlachtung, nach Abschluss der Totenstarre, im Punkt P die maximale Festigkeit. Danach reduziert sich die Festigkeit des Fleisches durch zelleigenen Enzyme und Mikroorganismen. Nach einer Reifezeit T von maximal 10 Tagen ist das Fleisch ausgereift und steht für den Verkauf bereit. Die Reifekurve R_{T1} zeigt den Verlauf der Festigkeit des Fleisches in Funktion der Zeit beim bekannten "fast aging"-Verfahrens unter Verwendung des Schimmelpilzes Thamnidium elegans. Der Reifekurve R_{T1} ist zu entnehmen, dass das Fleisch bereits nach etwa 8 Tagen dieselbe Festigkeit aufweist wie die Reifekurve R nach 10 Tagen. Die Verwendung des Schimmelpilzes Thamnidium elegans ermöglicht somit eine schnellere Fleischreifung, im dargestellten Beispiel um zwei Tage. Diese Verkürzung der Fleischreifung um zwei Tage ist, unter Berücksichtigung, dass sich Bakterien exponentiell vermehren, von entscheidender Bedeutung. Bedeutung, da die Fleischreifung dadurch auch bei höheren Temperaturen durchführbar ist.

Der Reifekurve R_{T2} zeigt den Verlauf der Festigkeit des Fleisches im Bereich der Lagerzeit von mehr als 21 Tagen. Nach 21 Tagen nimmt die Festigkeit des Fleisches immer weniger ab.

Figur 4 zeigt im Geschmacksverlauf G zudem den Geschmack des Fleisches in Funktion der Zeit, wobei der Geschmack vorwiegend oder ausschliesslich verursacht wird durch den Schimmelpilz Thamnidium elegans. Der Geschmack des Fleisches wurde subjektiv mit Versuchspersonen getestet und das Ergebnis auf Werte zwischen 0 und 12 skaliert, wobei die Skala so gewählt ist, dass das Fleisch bei 12 am Besten schmecken würde. Der Geschmacksverlauf G in Funktion der Zeit zeigt, dass sich dieser innerhalb der ersten 8 bis 10 Tage nur geringfügig entwickelt. Der Geschmacksverlauf G zeigt zudem, dass sich der Geschmack nach etwa 40 bis 50 Tagen nicht mehr erhöht, und somit in eine Sättigung gelangt. Durch die in Figur 4 dargestellten Versuche wurde erkannt, dass der Schimmelpilz Thamnidium elegans nach 10 Tagen nur eine Randschicht des Fleisches durchwachsen hat, wogegen bei Lagerung von 21 und mehr Tagen, je nach Fleischstück, das Fleisch bereits homogen vom Schimmelpilz durchwachsen ist und die biochemische Aktivität der Pilzenzyme auch im Fleischinneren wirken können. Bei einer Lagerzeit von zumindest 21 Tagen ist der maximal mögliche Geschmack etwa zur Hälfte entwickelt. Besonders vorteilhaft ist eine Lagerung zwischen 25 bis 45 Tagen beziehungsweise eine Lagerung zwischen 28 und 50 Tagen. Wie aus dem Geschmacksverlauf G ersichtlich weist dieser nach etwa 25 bis 28 Tagen eine abnehmende Steigung auf, und die Kurve des Geschmacksverlaufes G flacht danach zunehmend ab. Zudem nimmt die Zartheit nach 25 bis 28 Tagen nur noch beschränkt zu, sodass es aus Kosten-Nutzen-Überlegungen vorteilhaft ist das erfindungsgemässe Reifeverfahren nach etwa 25 bis 28 Tagen zu beenden. Beim erfindungsgemässen Verfahren wird die Festigkeit des Fleisches über mindestens 21 Tage und vorzugsweise über zumindest 25 oder 28 Tage stetig reduziert, beziehungsweise die Zartheit des Fleisches stetig gesteigert. Zudem wird der durch den Schimmelpilz Thamnidium elegans hervorgerufene Geschmack erheblich gesteigert, sodass nach 21 bis 28 Tagen ein aussergewöhnlich zartes, stark aromatisches, Fleisch vorliegt. Eine Reifezeit von mehr als 21 bzw. 28 Tagen bewirkt eine zusätzlich Erhöhung der Zartheit des Fleisches sowie des Geschmacks, wobei sich die Zunahme, wie aus Figur 4 ersichtlich, in Funktion der Zeit verringert, und bezüglich Geschmack nach etwa 50 Tagen kaum mehr eine Zunahme stattfinden, und bezüglich Zartheit nach etwa 100 Tagen kaum mehr eine Zunahme stattfindet.

Für ein besonders zartes und geschmacksvolles Fleisch erfolgt der Reifeprozess bei einer Temperatur zwischen 2 bis 4 °C, sowie bei einer relativen Luftfeuchtigkeit zwischen 85% und 98%, vorzugsweise zwischen 90% und 98%, um dadurch ein Wachstum von Mikroorganismen wie Bakterien zu behindern und um gleichzeitig das Wachstum des Schimmelpilzes Thamnidium elegans zu fördern. Unter diese Bedingungen wird das Fleisch vorzugsweise zwischen 28 bis 45 Tagen gelagert, um die in Figur 4 dargestellte Zartheit und den Geschmack zu erlangen.

## Patentansprüche

1. Verfahren zur Veredelung von Frischfleisch wobei während der Reifung des Fleisches der Schimmelpilz Thamnidium elegans zugegeben wird, wobei das Fleisch in einem Temperaturbereich zwischen 0 bis 8 °C gelagert wird, wobei das Fleisch bei einer relativen Luftfeuchtigkeit zwischen 50% und 98% gelagert wird, und wobei das Fleisch zwischen 21 bis 100 Tagen gelagert wird.

2. Verfahren nach Anspruch 1, **dadurch gekennzeichnet, dass** das Fleisch zwischen 28 bis 100 Tagen gelagert wird.

3. Verfahren nach Anspruch 1 oder 2, **dadurch gekennzeichnet, dass** das Fleisch bei einer relativen Luftfeuchtigkeit zwischen 50% und 95% gelagert wird.

4. Verfahren nach einem der Ansprüche 1 bis 3, **dadurch gekennzeichnet, dass** der Schimmelpilz Thamnidium elegans mit einer Sporendichte von zumindest 10⁹ Sporen pro cm² auf die Oberfläche des Fleisches aufgetragen wird, vorzugsweise mit einer Sporendicht zwischen 10¹² Sporen pro cm² und 10¹⁵ Sporen pro cm².

5. Verfahren nach einem der vorhergehenden Ansprüche, **dadurch gekennzeichnet, dass** das Fleisch in einem Temperaturbereich zwischen 1 bis 5 °C gelagert wird, und vorzugsweise in einem Temperaturbereich zwischen 2 bis 4 °C.

6. Verfahren nach einem der vorhergehenden Ansprüche, **dadurch gekennzeichnet, dass** das Fleisch bei einer relativen Luftfeuchtigkeit zwischen 75% und 98% gelagert wird.

7. Verfahren nach einem der vorhergehenden Ansprüche, **dadurch gekennzeichnet, dass** das Fleisch zwischen 28 bis 50 Tagen gelagert wird.

8. Verfahren nach einem der Ansprüche 1 bis 4, **dadurch gekennzeichnet, dass** das Fleisch in einem Temperaturbereich zwischen 1 bis 5 °C, bei einer relativen Luftfeuchtigkeit zwischen 75% und 95%, und zwischen 25 bis 45 Tagen gelagert wird.

9. Verfahren nach einem der Ansprüche 1 bis 4, **dadurch gekennzeichnet, dass** das Fleisch bei einer Temperatur zwischen 2 bis 4 °C, bei einer relativen Luftfeuchtigkeit zwischen 85% und 98%, vorzugsweise zwischen 90% und 98%, und zwischen 28 bis 45 Tagen gelagert wird.

10. Verfahren nach einem der vorhergehenden Ansprüche, **dadurch gekennzeichnet, dass** als Fleisch Kalb-, Rind-, Lamm-, Pferde- oder Schweinefleisch verwendet wird.

11. Verwendung des Schimmelpilzes Thamnidium elegans zur Reifung von Fleisch in einem Temperaturbereich zwischen 2 bis 4 °C, bei einer Luftfeuchtigkeit zwischen 90 bis 98% und während einer Zeitdauer von 21 bis 100 Tagen, vorzugsweise von 28 bis 100 Tagen.

## Claims

1. A method of enhancing fresh meat, wherein the mould Thamnidium elegans is added during the maturing of the meat; wherein the meat is stored in a temperature range between 0 and 8°C; wherein the meat is stored at a relative humidity between 50% and 98%; and wherein the meat is stored for between 21 and 100 days.

2. A method in accordance with claim 1, **characterised in that** the meat is stored for between 28 and 100 days.

3. A method in accordance with claim 1 or claim 2, **characterised in that** the meat is stored at a relative humidity between 50% and 95%.

4. A method in accordance with any one of the claims 1 to 3, **characterised in that** the mould Thamnidium elegans is applied to the surface of the meat at a spore density of at least 10⁹ spores per cm², preferably at a spore density between 10¹² spores per cm² and 10¹⁵ spores per cm².

5. A method in accordance with any one of the preceding claims, **characterised in that** the meat is stored in a temperature range between 1 and 5°C, and preferably in a temperature range between 2 and 4°C.

6. A method in accordance with any one of the preceding claims, **characterised in that** the meat is stored at a relative humidity between 75% and 98%.

7. A method in accordance with any one of the preceding claims, **characterised in that** the meat is stored for between 28 and 50 days.

8. A method in accordance with any one of the claims 1 to 4, **characterised in that** the meat is stored in a temperature range between 1 and 5°C, at a relative humidity between 75% and 95% and for between 25 and 45 days.

9. A method in accordance with any one of the claims 1 to 4, **characterised in that** the meat is stored at a temperature between 2 and 4°C, at a relative humidity between 85% and 98%, preferably between 90% and 98%, and for between 28 and 45 days.

10. A method in accordance with any one of the preceding claims, **characterised in that** veal, beef, lamb, horsemeat or pork is used as the meat.

11. Use of the mould Thamnidium elegans for maturing meat in a temperature range between 2 and 4°C, at a humidity between 90 and 98% and during a time period from 21 to 100 days, preferably from 28 to 100 days.

## Revendications

1. Procédé d'affinage de viande fraîche selon lequel la moisissure Thamnidium elegans est ajoutée pendant la maturation de la viande, sachant que la viande est entreposée à une température comprise entre 0 et 8 °C, sachant que la viande est entreposée en présence d'une humidité relative de l'air comprise entre 50 % et 98 % et sachant que la viande est entreposée pendant une durée comprise entre 21 et 100 jours.

2. Procédé selon la revendication 1, **caractérisé en ce que** la viande est entreposée pendant une durée comprise entre 28 et 100 jours.

3. Procédé selon la revendication 1 ou 2, **caractérisé en ce que** la viande est entreposée en présence d'une humidité relative de l'air comprise entre 50 % et 95 %.

4. Procédé selon l'une des revendications 1 à 3, **caractérisé en ce que** la moisissure Thamnidium elegans est appliquée sur la surface de la viande avec une densité de spores d'au moins 10⁹ spores par cm², de préférence avec une densité de spores comprise entre 10¹² spores par cm² et 10¹⁵ spores par cm².

5. Procédé selon l'une des revendications précédentes, **caractérisé en ce que** la viande est entreposée à une température comprise entre 1 et 5 °C, et de préférence à une température comprise entre 2 et 4 °C.

6. Procédé selon l'une des revendications précédentes, **caractérisé en ce que** la viande est entreposée en présence d'une humidité relative de l'air comprise entre 75 % et 98 %.

7. Procédé selon l'une des revendications précédentes, **caractérisé en ce que** la viande est entreposée pendant une durée comprise entre 28 et 50 jours.

8. Procédé selon l'une des revendications 1 à 4, **caractérisé en ce que** la viande est entreposée à une température comprise entre 1 et 5 °C, en présence d'une humidité relative de l'air comprise entre 75 % et 95 % et pendant une durée comprise entre 25 et 45 jours.

9. Procédé selon l'une des revendications 1 à 4, **caractérisé en ce que** la viande est entreposée à une température comprise entre 2 et 4 °C, en présence d'une humidité relative de l'air comprise entre 85 % et 98 %, de préférence entre 90 % et 98 %, et pendant une durée comprise entre 28 et 45 jours.

10. Procédé selon l'une des revendications précédentes, **caractérisé en ce qu'**on utilise comme viande de la viande de veau, de boeuf, d'agneau, de cheval ou de porc.

11. Utilisation de la moisissure Thamnidium elegans pour la maturation de viande à une température comprise entre 2 et 4 °C, en présence d'une humidité relative de l'air comprise entre 90 % et 98 % et pendant une durée comprise entre 21 et 100 jours, de préférence entre 28 et 100 jours.
